(19) Europäisches Patentamt
European Patent Office
Office européen des brevets

(11) EP 4 815 474 A1

(12) EUROPEAN PATENT APPLICATION

(43) Date of publication:
**30.09.2026 Bulletin 2026/40**

(21) Application number: **25305430.8**

(22) Date of filing: **25.03.2025**

(51) International Patent Classification (IPC):
***H04N 21/81*** *(2011.01)* ***H04N 21/854*** *(2011.01)*

(52) Cooperative Patent Classification (CPC):
**H04N 21/85406; H04N 21/8146**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
- **HAMZA, Ahmed**
  **COQUITLAM, V3J 3X5 (CA)**
- **COVA REGATEIRO, João Pedro**
  **35220 CHATEAUBOURG (FR)**
- **GOSSELIN, Philippe Henri**
  **35340 LIFFRE (FR)**

(74) Representative: **Vossius & Partner**
**Patentanwälte Rechtsanwälte mbB**
**Siebertstraße 3**
**81675 München (DE)**

# (54) METHOD AND DEVICES FOR CARRIAGE OF AVATAR ANIMATION STREAMS IN ISO BASE MEDIA FILE FORMAT CONTAINERS

(57) Systems, methods, and instrumentalities disclosed herein may be related to a carriage of avatar animation streams in ISO base media file format (ISOBMFF) containers. In examples, a device may include a processor. The device may be configured to determine an animation parameter associated with avatar information. The device may obtain an avatar animation track that comprises an animation field indicator. The animation field indicator may indicates the animation parameter associated with the avatar information. The device may send, in a media container, the avatar animation track. In examples, a device may obtain a media container. The device may determine an avatar animation track based on the obtained media container. The device may determine an animation parameter associated with avatar information based on an animation field indicator of the avatar animation track. The device may decode the avatar information based on the animation field indicator.

ARF Document
preamble
data
componets
structure
metadata
skeletons
assets
protection configurations
skins
lods
meshes
nodes
blendshapeSets
landmarkSets

FIG. 4



Processed by Luminess, 75001 PARIS (FR)

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and instrumentalities disclosed herein may be related to a carriage of avatar animation streams in ISO base media file format (ISOBMFF) containers. In examples, a device may include a processor. The device may be configured to determine an animation parameter associated with avatar information. The device may obtain an avatar animation track that comprises an animation field indicator. The animation field indicator may indicate the animation parameter associated with the avatar information. The device may send, in a media container, the avatar animation track. A device may be configured to obtain a media container. The device may determine an avatar animation track based on the obtained media container. The device may determine an animation parameter associated with avatar information based on an animation field indicator of the avatar animation track. The device may decode the avatar information based on the animation field indicator.

The device may include one or more features. For example, the animation field indicator may indicate an avatar identifier, and/or the device may obtain the avatar information based on the avatar identifier. The device may associate the avatar information with the avatar animation track. The animation field indicator may indicate a level of detail value, and/or the device may determine that an avatar has the level of details value. The device may associate the avatar with the avatar animation track. The device may receive media content. The media content may be associated with a timestamp in a timeline. The device may receive, via the avatar animation track, a sample associated with one or more avatar animation units (AAUs). The one or more AAUs may be associated with the timestamp. The device may receive an entity group indication. The entity group indication may associate an avatar representation format (ARF) file with the avatar animation track. The avatar animation track may be further determined for the avatar information based on the entity group indication. The device may obtain an ARF file based on the media container. The device may determine a property associated with the ARF file. The property may be at least one of a level of details or an asset. The device may receive a component property indication associated with an avatar component. The device may determine that the avatar component is to be used (e.g., for decoding the avatar information) based on the component property indication indicating that the avatar component is associated with the property. The device may obtain an avatar animation stream. The animation parameter associated with the avatar information may be determined based on the avatar animation stream. The device may store the avatar animation track in the media container.

The media container may be an ISOBMFF container. The animation field indicator may indicate one of an avatar animation unit length value, a weight precision value, a profile identifier, a timescale value, an avatar animation unit type, or a configuration avatar animation unit length value. The avatar animation track may be a timed metadata track.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates a block diagram of an example avatar data model including one or more components.
FIG. 5 illustrates an example of a binary structure using keyframe and non-keyframe avatar animation units (AAUs).

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

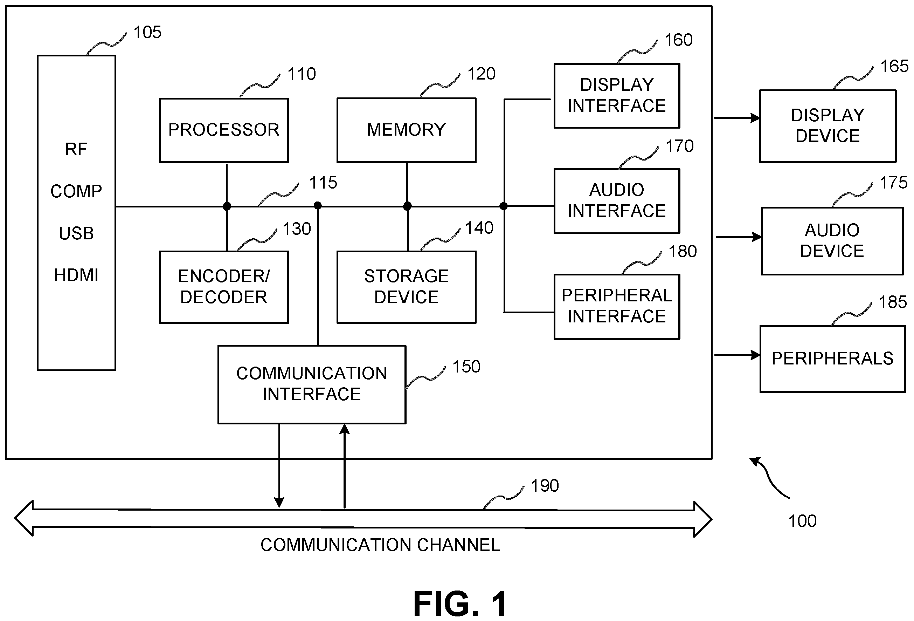

Referring to the drawings, there is shown in FIG. 1 a block diagram illustrating an example system 100 in which

embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless

networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

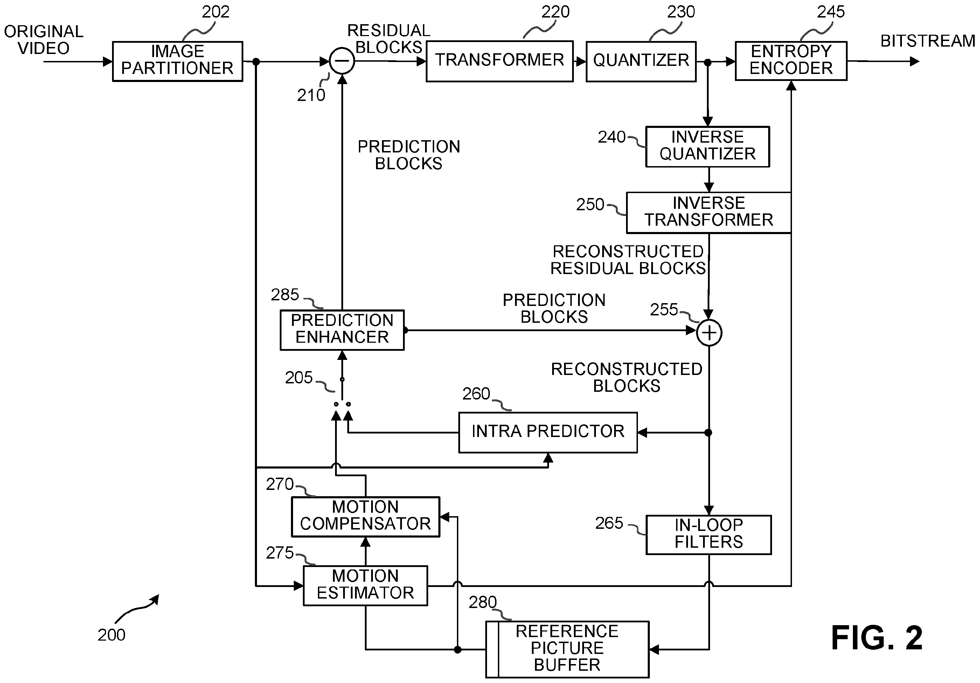

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

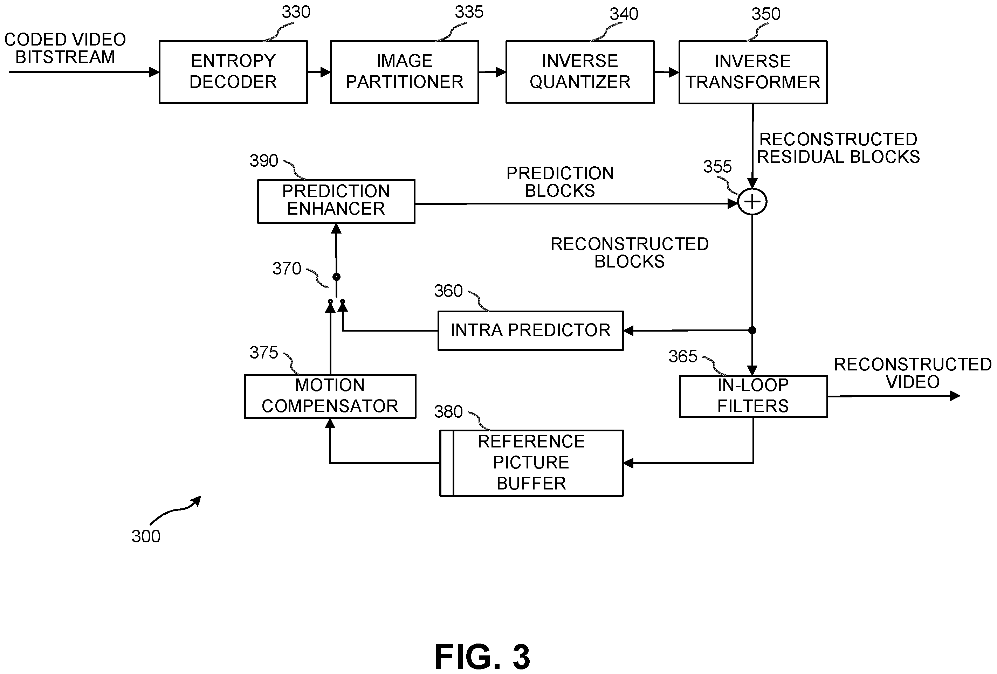

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, *Cb, Cr*).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy

encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Carriage (e.g., storage) of avatar animation streams in ISOBMFF containers may be described herein.

Examples described herein may relate to the storage and/or transmission of avatar animation data.

Avatars may include digital representations of users in the metaverse (e.g., a set of virtual worlds where people may interact with each other in real-time). Users may customize different aspects of their avatars, including clothing, accessories, and/or physical attributes. Avatars may allow users to express themselves and/or create a digital identity within the metaverse. The integration, animation, and/or representation of avatars in real-time communication services may enable an immersive experience.

An avatar representation format (ARF) may be described herein.

An interchange representation format for computer generated avatars and/or associated containers, and/or an animation stream format to represent the avatar dynamics and timed-based information may be described (e.g., in an ARF). An ARF may include a geometrical model and associated data (e.g., blendshapes, skeleton, normals, textures, maps, metadata, and/or the like), as well as a streamable format for dynamics associated to the geometrical model (e.g., animation parameters, tracking information, contextual data, and/or the like). Interoperability between existing models and formats and the ARF may be provided.

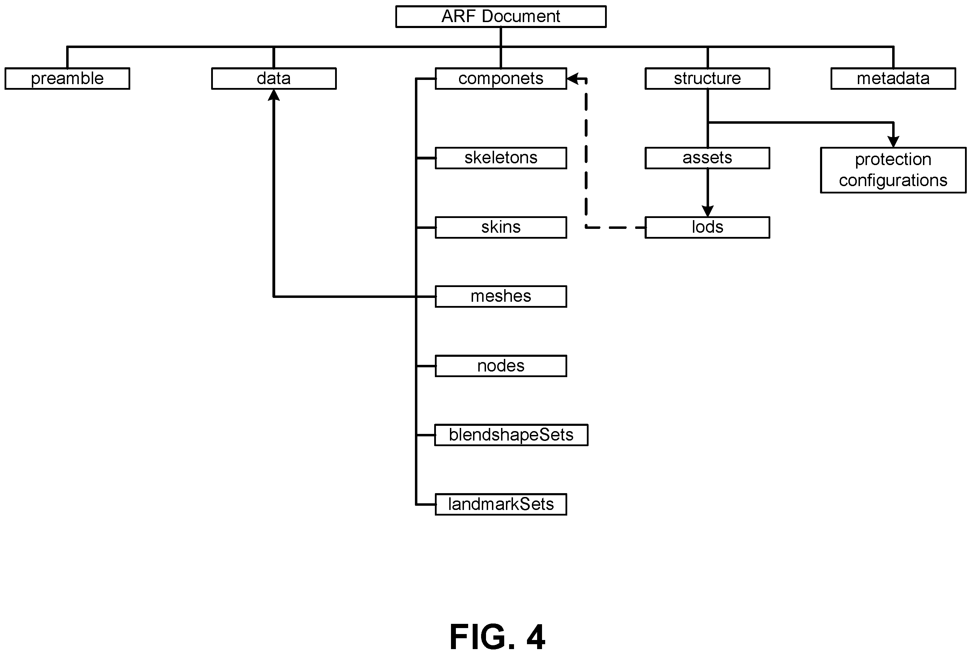

FIG. 4 is a block diagram illustrating an example of an avatar data model in ARF. An example of an avatar data model and/or a JSON-formatted document that describes a user's base avatar model may be described herein. The data model may be shown in FIG. 4 and may include one or more components, including at least one of: skeletons, meshes, blend shapes, skins, landmarks, and/or nodes (e.g., joints).

The ARF document may be included in an ARF container and/or may be the entry point of that container. The container may support partial access where a subset of the user's base avatar components may be accessed from the container. At least two container formats may be supported, including ISO base media file format (ISOBMFF) containers and/or Zip-based containers. ISOBMFF-based containers may include the ARF document in an ISOBMFF item in the top-level MetaBox along with one or more (e.g., other) items for (e.g., each of the) components provided in the ARF document. The ISOBMFF container may include an animation track with samples providing animation data over time. Zip-based containers may include a top-level ARF document, and/or the component files may be referenced relative to the location of that document.

An avatar animation bitstream format may be described herein.

Animation streams may include timed data used to animate an avatar. The data may include skeletal, blend shape set, and/or other animation-related information. An animation stream format may define how animation data is structured and/or provided between senders and receivers. A format may provide examples of how facial and/or body animation information is encoded (e.g., allowing data captured from input devices like Head-Mounted Displays (HMDs) and/or sensors to be interpreted across one or more systems for the animation of associated avatars).

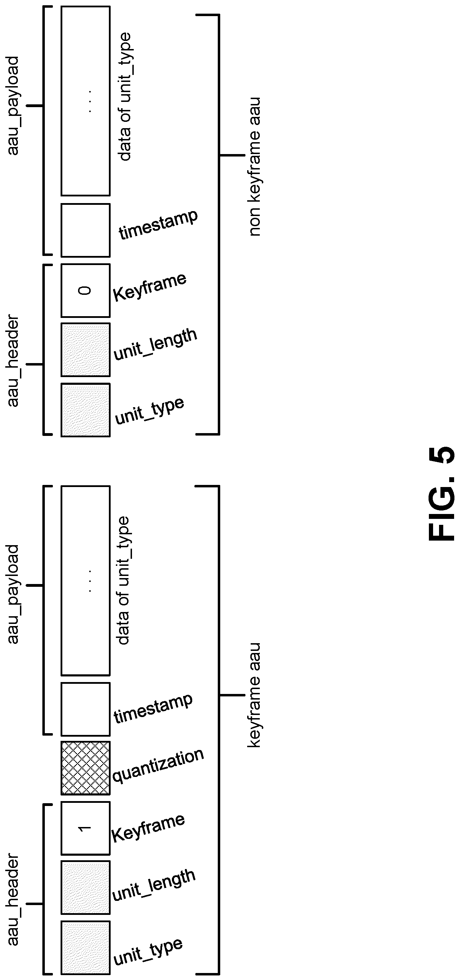

FIG. 5 illustrates an example of a binary structure using keyframe and non-keyframe avatar animation units (AAUs). Avatar animation data may be stored as samples in an avatar container (e.g., such as an MPEG ARF container), along with the avatar model representation. Avatar animation data may be generated on-the-fly as cameras and/or sensor capture a person's motion and generate corresponding commands to mimic movement for an avatar that represent the user. The avatar animation data may be structured as an avatar animation bitstream (e.g., as illustrated in in FIG. 5). An avatar animation bitstream may include a sequence of AAUs. The general syntax structure for an AAU may be included in Table 1.

An (e.g., each) AAU may include a header and/or a payload, where the AAU header includes a field that indicates the unit type and/or a field that indicates the AAU payload. The contents of the payload may depend on the type of the AAU.

A keyframe AAU may represent a structure of the bitstream format including (e.g., detailed) information about the frame being transmitted (e.g., quantization of the data in the payload of the unit as well as other payload properties). A non-keyframe AAU may include one or more properties (e.g., the same properties) of the payload as for the keyframe with the exception that the data being transmitted may be reconstructed relative to the previous keyframe AAU. The data of a non-keyframe AAU may be the difference between the current frame and the last keyframe AAU prior to the non-keyframe AAU (e.g., using the aau_quantization field as a precision parameter to reconstruct the current frame).

Table 1: Example syntax of avatar_animation_unit()

| Syntax | No. of bits | Mnemonic |
|---|---|---|
| avatar_animation_unit () | | [1] |
| { | | [2] |
| aau_header () ; | | [3] |
| if (aau_keyframe) | | [4] |
| aau_quantization | 16 | [5] uimsbf |
| aau_payload () ; | | [6] |
| ByteAlignement | 0-7 | [7] uimsbf |
| } | | [8] |

An example of the syntax structure of the AAU header may be included in Table 2.

Table 2: Example syntax of aau_header().

| Syntax | No. of bits | Mnemonic |
|---|---|---|
| aau_header () | | [9] |
| { | | [10] |
| aau_unit_type; | 7 | [11] uimsbf |
| aau_unit_length; | 32 | [12] uimsbf |
| aau_keyframe; | 1 | [13] boolean |
| if (aau_keyframe) | | [14] |
| aau_quantization | 16 | [15] uimsbf |
| reserved | 1 | [16] uimsbf |
| } | | [17] |

The aau_header() syntax construct may include the following syntax elements:

aau_unit_type may indicate the type of the AAU (e.g., example values are described in Table 3).
aau_unit_length may indicate the size of the AAU payload in bytes.
aau_keyframe may indicate if/whether the AAU payload is a keyframe.
aau_quantization may indicate that the type of the AAU signaled by aau_unit_type is not a keyframe, (e.g., the AAU carries a quantization scale for the carried data).

Table 3: Example AAU type codes and corresponding payloads.

| aau_unit_type | Name of AAU type | Content of AAU payload |
|---|---|---|
| 0 | AAU_CONFIG | aau_config_unit() |
| 1 | AAU_ANIMATION | aau_animation_unit() |
| 2 | AAU_JOINT | aau_joint_unit() |
| 3 | AAU_LANDMARK | aau_landmark_unit() |
| 4..10 | AAU_RSV_4<br>AAU_RSV_10 | Reserved AAU types. |
| 11..127 | AAU_UNSPEC_11<br>AAU_UNSPEC_127 | Unspecified AAU types. |

The example syntax of aau_payload() may be included in Table 4.

Table 4: Example syntax of aau_payload().

| Syntax | No. of bits | Mnemonic |
|---|---|---|
| aau_payload() | | |
| { | | |
| aau_timestamp; | 32 | uimsbf |
| if (aau_unit_type == AAU_CONFIG) | | |
| aau_config_unit() | | |
| else if (aau_unit_type == AAU_ANIMATION) | | |
| aau_animation_unit() | | |
| else if (aau_unit_type == AAU_JOINT) | | |
| aau_joint_unit() | | |
| else if (aau_unit_type == AAU_LANDMARK) | | |
| aau_landmark_unit() | | |
| } | | |

The aau_payload() syntax construct may include the following syntax elements:
aau_timestamp may be the timestamp of the AAU in ticks. The timestamp in seconds may be calculated as a timestamp and/or timescale (e.g., where timescale is signalled in the configuration AAU).

ByteAlignment may be a padding with, for example, up to seven bits set to 0 for the AAU payload to be byte-aligned.

An ISOBBMFF may be described herein.

File formats for the storage of time-based media may be described herein. File formats may be based on and/or derived from the ISOBMFF (e.g., which may be a structural, media-independent definition). ISOBMFF may include structural and/or media data information for timed presentations of media data (e.g., such as audio, video, and/or the like). Un-timed data, such as metadata at one or more levels within the file structure may be provided. In examples, the logical structure of the file may include a movie that includes a set of time-parallel tracks. As part of the time structure of the file, the tracks may include a sequence(s) of samples in time, and/or the sequence(s) may be mapped into the timeline of the (e.g., overall) movie. ISOBMFF may be based on box-structured files. A box-structured file may include one or more boxes (e.g., referred to as atoms), that include a size and a type. The type may be a 32-bit value and/or may be chosen to be four

printable characters (e.g., known a four-character code (4CC)). Un-timed data may be included in a metadata box, at the file level, or attached to the movie box or one of the streams of timed data (e.g., called tracks within the movie).

A box in an ISOBMFF container (e.g., among the top-level boxes within an ISOBMFF container) may be the MovieBox (e.g., moov), which may include metadata for the continued media streams present in the file. The metadata may be signaled within the hierarchy of boxes in the MovieBox (e.g., within the TrackBox (trak)). A track may represent a (e.g., continuous) media stream that is present in the file. The media stream may include a sequence of samples, such as audio or video access units of an elementary media stream and/or may be enclosed within a MediaDataBox (mdat) that may be present at the top-level of the container. The metadata for a (e.g., each) track may include a list of sample description entries, where an entry may (e.g., each entry may) provide the coding or encapsulation format used in the track and/or the initialization data for processing the format. A (e.g., each) sample may be associated with a (e.g., one) of the sample description entries of the track. Table 5 includes an example tool for defining an explicit timeline map for a (e.g., each) track. An edit list may be signalled using an EditListBox with the following syntax, where an (e.g., each) entry defines part of the track timeline by mapping part of the composition timeline, or by indicating ’empty’ time (e.g., portions of the presentation timeline that map to no media, an ’empty’ edit).

Table 5: Example of a timeline map for a track.

```
aligned(8) class EditListBox extends FullBox(’elst’, version,
flags) {
     unsigned int(32) entry_count;
     for (i=1; i <= entry_count; i++) {
           if (version==1) {
                unsigned int(64) edit_duration;
                int(64) media_time;
           } else { // version==0
                unsigned int(32) edit_duration;
                int(32) media_time;
           }
           int(16) media_rate_integer;
           int(16) media_rate_fraction = 0;
     }
}
```

A mechanism for storing avatar animation streams in ISOBMFF media containers and/or providing signaling that enables a player to identify the characteristics of the bitstream and/or to associate an avatar description document (e.g., such as the ARF stored in an ISOBMFF container) with tracks carrying (e.g., storing) the animation streams of the avatar may be described herein.

Avatar animation tracks may be described herein.

An avatar animation stream may be carried (e.g., stored) in ISOBMFF media containers (e.g., along with one or more types of media such as audio and/or video), as avatar animation tracks. Avatar animation tracks may be timed-metadata tracks with samples that carry (e.g., store) avatar animation data (e.g., an avatar animation track may include an animation field indicator that indicates an animation parameter associated with avatar information). An avatar animation may include a sample entry of type AvatarAnimationSampleEntry as described herein with reference to Table 6.

Table 6: Example of a timed-metadata track

```
aligned(8) class AvatarAnimationConfigurationRecord {
   unsigned int(3) unit_size_precision_bytes_minus1;
   unsigned int(3) weight precision;
   bit(1) target_avatar_info_present_flag;
   bit(1) reserved = 0;
   utf8string profile;
   unsigned int(32) timescale;
    if (target_avatar_info_present_flag) {
       unsigned int(8) avatar id;
       unsigned int(8) avatar_lod;
    }
   avatar_animation_unit config_aau;
 }
aligned(8) class AvatarAnimationConfigurationBox extends
FullBox('avaC', version=0, flags=0) {
   AvatarAnimationConfigurationRecord() ava_animation_config;
 }
aligned(8) class AvatarAnimationSampleEntry() extends
MetadataSampleEntry('ava1') {
   AvatarAnimationConfigurationBox config;
 }
```

The semantics for the fields (e.g., an animation field indicator) described in AvatarAnimationConfigurationBox may include:

unit_size_precision_minus1 may indicate the length in bytes of the AAUnitLength field in an animation sample of the associated stream minus one (e.g., as an animation parameter). For example, a size of a (e.g., one) byte may be indicated with a value of 0. The value of the field may be at least one of 0, 1, or 3 (e.g., corresponding to a length encoded with 1, 2, or 4 bytes, respectively).
weight_precision may indicate the length in bytes of the weight values in a sample (e.g., within each sample), for example, as an animation parameter. The value of precision may be greater than 0 and/or smaller or equal to 4.
"profile" may indicate a character string (e.g., as an animation parameter) with the name of the profile that animation stream carried in the track is associated with (e.g., conforms to).
"timescale" may indicate the number of ticks per second, for example, as an animation parameter. For example, a time coordinate system that measures time in sixtieths of a second may have a time scale of 60.
avatar_id may indicate an identifier (e.g., as an animation parameter) for the avatar to which the animation stream carried in the track may be associated.
avatar_lod may indicate an integer identifying the level-of-detail (LoD) (e.g., as an animation parameter) of the avatar that the animation stream carried in the track is associated to.
avatar_animation_unit may indicate an AAU (e.g., as an animation parameter) of type AAU_CONFIG (e.g., a configuration avatar animation unit).

An example AvatarAnimationConfigurationBox may be described with reference to Table 7.

Table 7: Example description of AvatarAnimationConfigurationBox

```
aligned(8) class AvatarAnimationConfigurationBox extends
FullBox('avaC', version=0, flags=0) {
  unsigned int(3) unit_size_precision_bytes_minus1;
  unsigned int(3) weight_precision;
  bit(2) reserved = 0;
  unsigned int((unit_size_precision_bytes_minus1 + 1)*8)
config_unit_length;
  bit(config_unit_length * 8) config_unit;
}
```

The semantics for the fields (e.g., an animation filed indicator) described in AvatarAnimationConfigurationBox may include:

unit_size_precision_minus1 may indicate the length in bytes of the AAUnitLength field in an animation sample of the associated stream minus one. For example, a size of a (e.g., one) byte may be indicated with a value of 0. The value of the field may be at least one of 0, 1, or 3 (e.g., corresponding to a length encoded with 1, 2, or 4 bytes, respectively).
weight_precision may indicate the length in bytes of the weight values in a sample (e.g., within each sample). The value of precision may be greater than 0 and/or smaller or equal to 4.
config_unit_length may indicate the size of the configuration AAU carried in AvatarAnimationConfigurationBox.
config_unit may indicate an AAU of type AAU_CONFIG (e.g., a configuration AAU).

In examples, the AvatarAnimationSampleEntry may extend the URIMetaDataSampleEntry and/or may use a uniform resource identifier (URI) scheme (e.g., urn:mpeg:avatar:animation) that identifies the format of the samples of the track as described herein. The URI may be set in the URIBox inherited from the URIMetaDataSampleEntry box. In examples, in addition to the URIBox and the URIInitBox inherited from the URIMetaDataSampleEntry box, the Avatar-AnimationSampleEntry may include an AvatarAnimationConfigurationBox as described herein. Additionally and/or alternatively, the contents of the AvatarAnimationConfigurationBox may be embedded in the uri_initialization_data byte array described in the URIInitBox.

An avatar animation sample format may be described herein.

An avatar animation track may include and/or indicate one or more samples (e.g., animation samples). The samples of an avatar animation track may include avatar animation data. A (e.g., each) sample may carry (e.g., store) avatar animation data associated with a timestamp (e.g., a particular timestamp) in the media (e.g., presentation) timeline. For example, a sample may include one or more AAU(s) that are associated with (e.g., that belong to) a presentation time (e.g., the same presentation time). The format of an (e.g., each) avatar animation sample of the track may be described with reference to Table 8.

Table 8: Example format for an avatar animation sample of a track

```
aligned(8) class AvatarAnimationSample {
  // sample_size size of sample from SampleSizeBox
  for (int i=0; i < sample_size; ) {
    unsigned
int((AvatarAnimationConfigurationRecord.unit_size_precision_byt
es_minus1 + 1)*8) AAUnitLength;
    bit(AAUnitLength * 8) AAUnit;
    i +=
(AvatarAnimationConfigurationRecord.unit_size_precision_bytes_m
inus1 + 1) + AAUnitLength;
   }
}
```

The semantics of the fields described in AvatarAnimationSample may include:
AAUnitLength may be the size of the AAU measured in bytes. The length field may include the size of (e.g., both) the AAU header and/or the AAU payload (e.g., but may not include the length field itself).

AAUnit may include an AAU (e.g., a single AAU). Syntax of an AAU may be as described herein.

An avatar animation sample may be designated as a sync sample if (e.g., all) the AAU(s) in the sample are keyframe AAU(s). An avatar animation sync sample may satisfy one or more of the following conditions: the avatar animation sync sample may be independently processed (e.g., it may be possible to independently process the sample); none of the samples that come after the sync sample may include a processing dependency on a sample prior to the sync sample; or a sample (e.g., all samples) that come after the sync sample may be (e.g., successfully) processed.

An association of an ARF item with its avatar animation track(s) may be described herein.

An ARF document (e.g., ARF file) may be stored as an item in media container(s) (e.g., ISOBMFF container(s)). An ISOBMFF container may store additional information (e.g., more than an avatar). A metadata item (e.g., MetaBox) in an ISOBMFF media container may signal (e.g., be used to signal) one or more ARF document items. To associate an avatar (e.g., each avatar) with the corresponding avatar animation track(s), an avatar's ARF item in the container may be grouped with the animation track(s) using an entity group signaled by an EntityToGroupBox, in the GroupsListBox of the MetaBox. The grouping_type of the EntityToGroupBox may be set to a code (e.g., a unique four-character code (4CC) (e.g., avag)), that may identify the type of grouping in the entity group as that for grouping an avatar with its animation track(s) (e.g., a device may receive an entity group identification that associates an ARF file with the avatar animation track). The EntityToGroupBox may include an (e.g., at most one) item identifier (item_ID), corresponding to the item carrying (e.g.,

storing) the ARF document, and/or one or more track identifier(s) (track_IDs) for the avatar animation tracks associated with the avatar represented by the ARF document. In examples, the avatar animation track may be determined for the avatar information based on the entity group identification.

If multiple (e.g., more than one) avatars are present in an ISOBMFF file, there may be a corresponding EntityToGroupBox in the GroupsListBox for the one or more (e.g., for each) avatars that include corresponding avatar animation track(s) in the file. By parsing the EntityToGroupBox, the player may identify the track identifiers for (e.g., all) avatar animation track(s) associated with the avatar that includes an item identifier that is part of the entity group.

In examples, if an avatar model includes one or more assets (e.g., a number of assets), then the set of avatar animation tracks associated with an asset may be grouped with the asset using an asset animation group indication AvatarAssetAnimationGroupBox as described in Table 9 (e.g., where the box inherits a list of entity IDs from its parent EntityToGroupBox).

Table 9: Example of a grouped set of avatar animation tracks

```
aligned(8) class AvatarAssetAnimationGroupBox()
        extends EntityToGroupBox('avag', version=0, flags) {
         unsigned int(8) avatar_id;
         unsigned int(8) asset_id;
        unsigned int(4) level_of_detail;
```

The semantics of the fields (e.g., an animation field indicator) of AvatarAssetAnimationGroupBox may include:

avatar_id may indicate the (e.g., unique) identifier for the avatar associated with an entity group.
asset_id may indicate the (e.g., unique) identifier for the avatar asset that an entity group is associated with.
level_of_detail may indicate the LoD of the asset to which the component is associated. Supporting (e.g., partial) access to avatar model components may be described herein.

A user may (e.g., a player first needs to) retrieve the ARF document from an item (e.g., the primary item) in the ISOBMFF container and/or identify an asset and/or a LoD (e.g., that the user may need). A user may identify (e.g., the player may then identify) the set of items that correspond to the components of the asset and/or LoD (e.g., the asset and LoD combination).

A component item (e.g., each component item) may be associated with a component property indication AvatarComponentInfoProperty that indicates (e.g., describes) which avatar, asset, and/or LoD the component is associated with. A corresponding AvatarComponenatInfoProperty instance may be present in the ItemPropertyContainerBox of the ItemPropertiesBox for a (e.g., each) component item. The AvatarComponentInfoProperty is described in Table 10.

Table 10: Example of an AvatarComponentInfoProperty

```
aligned(8) class AvatarComponentInfoProperty
     extends ItemProperty('avcp') {
     unsigned int(1) static_association_flag;
     bit(7) reserved = 0;
     if (static_association_flag) {
         unsigned int(8) avatar_id;
         unsigned int(8) asset_id;
      }
     unsigned int(4) component_type;
     unsigned int(4) level_of_detail;
}
```

The semantics of the fields (e.g., an animation field indicator) of AvatarComponentInfoProperty may include:

static_association_flag may indicate a flag indicating if the component is associated with an avatar (e.g., a single avatar). A value of 0 may indicate that the avatar is associated with multiple avatars (e.g., more than one avatar). A value of 1 may indicate that the component is associated with an avatar (e.g., a single avatar) whose identifier is provided by the avatar_id field.
avatar_id may indicate the (e.g., unique) identifier for the avatar that the component is associated with. The field (e.g., avatar_id) may be present (e.g., is only present) if static_association_flag is set to 1.
asset_id may indicate the (e.g., unique) identifier for the avatar asset that the component is associated with. The field (e.g., asset_id) may be present (e.g., is only present) if static_association_flag is set to 1.

component_type may indicate an integer indicating the type of the component. One or more values (e.g., values 0 to xx) may designate one or more component type(s), such as a skeleton, skin, mesh, node, blend shape set, and/or landmark set. Other values may be reserved for future use.

level_of_detail may indicate the LoD of the asset to which the component is associated.

The association between (e.g., each) component item(s) and the component item's AvatarComponentInfoProperty may be provided using the ItemPropertyAssociationBox (e.g., which may list, for (e.g., each) item the property_index of a (e.g., each) property associated with the item). A bit flag (e.g., the essential bit flag) may be set to 1 for a (e.g., each) property entry in the ItemPropertyAssocationBox, referring to an AvatarComponentInfoProperty, signaling that it (e.g., the AvatarComponentInfoProperty) may be an essential property of the item.

To identify a component (e.g., all the components) that relates to an avatar model (e.g., a particular avatar model) in the container, an item reference of type 'avcr' may be used. Identifying component(s) may be performed by listing the item_IDs of the components in a SingleItemTypeReferenceBox of type 'avcr' for the avatar model's item within the ItemReferenceBox.

For example, a device may obtain an ARF file using a media container. The device may determine a property (e.g., one or more of an avatar ID, a level of details, a component type, or an asset) associated with the ARF file. The device may receive a component property indication (as described in one or more examples herein) associated with an avatar component. The device may determine that the avatar component is to be used (e.g., for generating an avatar) based on the component property indication indicating that the avatar component is associated with the property.

Systems, methods, and instrumentalities disclosed herein may be related to a carriage of avatar animation streams in ISO base media file format (ISOBMFF) containers. In examples, a device may include a processor. The device may be configured to determine an animation parameter associated with avatar information. The device may obtain an avatar animation track that comprises an animation field indicator. The animation field indicator may indicate the animation parameter associated with the avatar information. The device may send, in a media container, the avatar animation track. A device may be configured to obtain a media container. The device may determine an avatar animation track based on the obtained media container. The device may determine an animation parameter associated with avatar information based on an animation field indicator of the avatar animation track. The device may decode the avatar information based on the animation field indicator.

The device may include one or more features. For example, the animation field indicator may indicate an avatar identifier, and/or the device may obtain the avatar information based on the avatar identifier. The device may associate the avatar information with the avatar animation track. The animation field indicator may indicate a level of detail value, and/or the device may determine that an avatar has the level of details value. The device may associate the avatar with the avatar animation track. The device may receive media content. The media content may be associated with a timestamp in a timeline. The device may receive, via the avatar animation track, a sample associated with one or more avatar animation units (AAUs). The one or more AAUs may be associated with the timestamp. The device may receive an entity group indication. The entity group indication may associate an avatar representation format (ARF) file with the avatar animation track. The avatar animation track may be further determined for the avatar information based on the entity group indication. The device may obtain an ARF file based on the media container. The device may determine a property associated with the ARF file. The property may be at least one of a level of details or an asset. The device may receive a component property indication associated with an avatar component. The device may determine that the avatar component is to be used (e.g., for decoding the avatar information) based on the component property indication indicating that the avatar component is associated with the property. The device may obtain an avatar animation stream. The animation parameter associated with the avatar information may be determined based on the avatar animation stream. The device may store the avatar animation track in the media container.

The media container may be an ISOBMFF container. The animation field indicator may indicate one of an avatar animation unit length value, a weight precision value, a profile identifier, a timescale value, an avatar animation unit type, or a configuration avatar animation unit length value. The avatar animation track may be a timed metadata track.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be imple-

mented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

**1.** A device, comprising:
a processor configured to:

determine an animation parameter associated with avatar information;
obtain an avatar animation track that comprises an animation field indicator, wherein the animation field indicator indicates the animation parameter associated with the avatar information; and
send, in a media container, the avatar animation track.

**2.** A device, comprising:
a processor configured to:

obtain a media container;
determine an avatar animation track based on the obtained media container;
determine an animation parameter associated with avatar information based on an animation field indicator of the avatar animation track; and
decode the avatar information based on the animation field indicator.

**3.** The device of claim 2, wherein the animation field indicator indicates an avatar identifier, and wherein the processor is further configured to:

obtain the avatar information based on the avatar identifier; and
associate the avatar information with the avatar animation track.

4. The device of any one of claims 2 to 3, wherein the animation field indicator indicates a level of detail value, and wherein the processor is further configured to:

determine that an avatar has the level of details value; and
associate the avatar with the avatar animation track.

5. The device of any one of claims 2-4, wherein the processor is further configured to:

receive media content, wherein the media content is associated with a timestamp in a timeline; and
receive, via the avatar animation track, a sample associated with one or more avatar animation units (AAUs), wherein the one or more AAUs are associated with the timestamp.

6. The device of any one of claims 2-5, and wherein the processor is further configured to:
receive an entity group indication, wherein the entity group indication associates an avatar representation format (ARF) file with the avatar animation track, and wherein the avatar animation track is further determined for the avatar information based on the entity group indication.

7. The device of any of claims 2-6, wherein the processor is further configured to:

obtain an ARF file based on the media container;
determine a property associated with the ARF file, wherein the property is at least one of a level of details or an asset;
receive a component property indication associated with an avatar component; and
determine that the avatar component is to be used for decoding the avatar information based on the component property indication indicating that the avatar component is associated with the property.

8. The device of claim 1, wherein the processor is further configured to:

obtain an avatar animation stream, wherein the animation parameter associated with the avatar information is determined based on the avatar animation stream; and
store the avatar animation track in the media container.

9. The device of any of claims 1 to 8, wherein the media container is an ISO Base Media File Format (ISOBMFF) container.

10. The device of any of claims 1 to 9, wherein the animation field indicator indicates one of an avatar animation unit length value, a weight precision value, a profile identifier, a timescale value, an avatar animation unit type, or a configuration avatar animation unit length value.

11. The device of any one of claims 1 to 10, wherein the avatar animation track is a timed metadata track.

12. A method, comprising:

determining an animation parameter associated with avatar information;
obtaining an avatar animation track that comprises an animation field indicator, wherein the animation field indicator indicates the animation parameter associated with the avatar information; and
sending, in a media container, the avatar animation track.

13. A method, comprising:

obtaining a media container;
determining an avatar animation track based on the obtained media container;
determining an animation parameter associated with avatar information based on an animation field indicator of the avatar animation track; and
decoding the avatar information based on the animation field indicator.

14. The method of claim 13, wherein the animation field indicator indicates an avatar identifier, and wherein the method further comprises:

obtaining the avatar information based on the avatar identifier; and
associating the avatar information with the avatar animation track.

**15.** The method of any one of claims 13 to 14, wherein the animation field indicator indicates a level of detail value, and wherein the method further comprises:

determining that an avatar has the level of details value; and
associating the avatar with the avatar animation track.

105
RF
COMP
USB
HDMI
110
PROCESSOR
120
MEMORY
115
130
ENCODER/ DECODER
140
STORAGE DEVICE
150
COMMUNICATION INTERFACE
160
DISPLAY INTERFACE
170
AUDIO INTERFACE
180
PERIPHERAL INTERFACE
165
DISPLAY DEVICE
175
AUDIO DEVICE
185
PERIPHERALS
190
COMMUNICATION CHANNEL
100

FIG. 1

ORIGINAL VIDEO
202
IMAGE PARTITIONER
RESIDUAL BLOCKS
210
220
TRANSFORMER
230
QUANTIZER
245
ENTROPY ENCODER
BITSTREAM
PREDICTION BLOCKS
240
INVERSE QUANTIZER
250
INVERSE TRANSFORMER
RECONSTRUCTED RESIDUAL BLOCKS
285
PREDICTION ENHANCER
PREDICTION BLOCKS
255
RECONSTRUCTED BLOCKS
205
260
INTRA PREDICTOR
270
MOTION COMPENSATOR
265
IN-LOOP FILTERS
275
MOTION ESTIMATOR
280
REFERENCE PICTURE BUFFER
200

FIG. 2

CODED VIDEO BITSTREAM
330
ENTROPY DECODER
335
IMAGE PARTITIONER
340
INVERSE QUANTIZER
350
INVERSE TRANSFORMER
RECONSTRUCTED RESIDUAL BLOCKS
390
PREDICTION ENHANCER
PREDICTION BLOCKS
355
RECONSTRUCTED BLOCKS
370
360
INTRA PREDICTOR
375
MOTION COMPENSATOR
365
IN-LOOP FILTERS
RECONSTRUCTED VIDEO
380
REFERENCE PICTURE BUFFER
300

FIG. 3

ARF Document
preamble
data
componets
structure
metadata
skeletons
assets
protection configurations
skins
lods
meshes
nodes
blendshapeSets
landmarkSets

FIG. 4

aau_header
aau_payload
unit_type
unit_length
1
Keyframe
quantization
timestamp
data of unit_type
keyframe aau
aau_header
aau_payload
unit_type
unit_length
0
Keyframe
timestamp
data of unit_type
non keyframe aau

FIG. 5

Europäisches
Patentamt
European
Patent Office
Office européen
des brevets

# EUROPEAN SEARCH REPORT

Application Number
EP 25 30 5430

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AHMED HAMZA (INTERDIGITAL) ET AL: "[SD][Avatar] MPEG Avatar Animation Stream", 148. MPEG MEETING; 20241104 - 20241108; KEMER; (MOTION PICTURE EXPERT GROUP OR ISO/IEC JTC1/SC29/WG11), , no. m70326 30 October 2024 (2024-10-30), XP030329294, Retrieved from the Internet: URL:https://dms.mpeg.expert/doc_end_user/documents/148_Kemer/wg11/m70326-v1-m70326.zip m70326 - [SD][AVATAR] MPEG Avatar Animation Stream.docx [retrieved on 2024-10-30] * the whole document * ----- | 1-15 | INV. H04N21/81 H04N21/854 |
| X | Anonymous: "ISO/IEC JTC 1/SC 29/WG 3 N01468 EE Description for Avatar representation formats", MPEG 149, 4 March 2025 (2025-03-04), pages 1-58, XP093285047, https://www.mpeg.org/standards/MPEG-I/39/ Retrieved from the Internet: URL:https://www.mpeg.org/wp-content/uploads/mpeg_meetings/149_Geneva/w24878.zip * pages 6-13 * ----- -/-- | 1-15 | TECHNICAL FIELDS SEARCHED (IPC) H04N |

The present search report has been drawn up for all claims

2

| Place of search | Date of completion of the search | Examiner |
|---|---|---|
| Munich | 23 July 2025 | Folea, Octavian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

page 1 of 2

Europäisches
Patentamt
European
Patent Office
Office européen
des brevets

# EUROPEAN SEARCH REPORT

Application Number
EP 25 30 5430

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "WD of ISO/IEC 23090-39 Avatar representation formats", 148. MPEG MEETING; 20241104 - 20241108; KEMER; (MOTION PICTURE EXPERT GROUP OR ISO/IEC JTC1/SC29/WG11), , no. n24542 16 December 2024 (2024-12-16), XP030327296, Retrieved from the Internet: URL:https://dms.mpeg.expert/doc_end_user/documents/148_Kemer/wg11/MDS24542_WG03_N01398.zip MDS24542_N01398_WG03_WD_23090-39_final_cl.docx [retrieved on 2024-12-16] * pages 8-19 * ----- | 1-15 | |

TECHNICAL FIELDS SEARCHED (IPC)

The present search report has been drawn up for all claims

| Place of search | Date of completion of the search | Examiner |
|---|---|---|
| Munich | 23 July 2025 | Folea, Octavian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

page 2 of 2